# EUROPÄISCHE PATENTSCHRIFT

(11) **EP 0 713 318 B1**
(45) Veröffentlichungstag und Bekanntmachung des Hinweises auf die Patenterteilung: **31.08.2005**
(21) Anmeldenummer: 95203048.4
(22) Anmeldetag: 09.11.1995
(51) Int. Cl.: H04M 3/50, H04Q 11/04

(54) **Fernbedienter und abgesetzter Operator-Arbeitsplatz und Verfahren zum Betrieb**
Remotely controlled and controlling attendant desks and method of operation
Pupitre d'opération télécommandé et pupitre d'opération télécommandant et procédé de fonctionnement

(30) Priorität: 17.11.1994 CH 345394
(43) Veröffentlichungstag der Anmeldung: 22.05.1996
(73) Patentinhaber: ALCATEL, 75008 Paris (FR)
(72) Erfinder: Christinger, Hansjörg, CH-8330 Pfäffikon (CH)
(74) Vertreter: Schätzle, Albin

(56) Entgegenhaltungen:
- EP-A- 0 177 218
- EP-A- 0 576 205
- WO-A-93/04550
- NL-A- 9 100 423
- ICC'86, SESSION 39, PAPER 8, Bd. 2, 22.Juni 1986, TORONTO, CA, Seiten 1-3, XP002000067 J.JAGGERNAUT ET AL.: "ISDN Attendant Console"
- PATENT ABSTRACTS OF JAPAN vol. 010, no. 201 (E-419), 15.Juli 1986 & JP-A-61 043057 (NIPPON TELEGR & TELEPH CORP), 1.März 1986,

## Beschreibung

Die Erfindung liegt auf dem Gebiet der bedienerunterstützten Vermittlung telephonischer Auskünfte und Verbindungen und betrifft die Ausrüstung und Beschaltung eines Operator-Arbeitsplatzes.

Ein Operator-Arbeitsplatz dient dazu, Telephonanrufe entgegennehmen und dem Anrufer entsprechende Auskünfte erteilen zu können und/oder weiter zu vermitteln. Die Betreiber von Telephonnetzen zum Beispiel bieten üblicherweise verschiedene Dienste an, insbesondere Auskünfte über die Teilnehmeranschlüsse, Tarife usw., die über spezielle Nummern zu erreichen sind. Arbeitsplätze solcher Auskunftstellen sind an Vermittlungszentralen angeschlossen, die mit Modulen für bedienerunterstützte Dienste ausgerüstet sind. Derartige Zentralen sind im folgenden kurz mit Dienstvermittlungsstelle (Operater Service Exchange, OSX) bezeichnet - bei der schweizerischen Telecom PTT zum Beispiel werden sie integrierte Dienstzentralen (IDZ) genannt. Sie sind mit einem Arbeitsplatzrechner (Personal Computer, PC) und einer Sprechgarnitur ausgerüstet, die beide über eine Platzsteuereinheit (Position Desk Controller, PDC) - eines zur Dienstvermittlungsstelle gehörigen Moduls - mit der OSX verkehren. Der PC eines solchen digitalen Vermittlerplatzes (Digital Operator Position, DOP) greift auf die benötigten Informationsquellen zu, sei dies im lokalen Speicher, sei dies über ein lokales Netz (LAN) bei anderen Rechnern, oder über ein Weitverbindungsnetz (WAN).

Derartige digitale Vermittlerplätze sind üblicherweise in der Nähe der Dienstvermittlungsstelle eingerichtet und mehrfach vorhanden. Bedient wird diese Mehrzahl von Arbeitsplätzen nach Bedarf, das heisst, der Anzahl Anrufe. Dieser lässt sich allerdings zeitweise nur schwer abschätzen. Bei unerwartetem Verkehrsaufkommen oder -abflachen ist es für den Betreiber kaum möglich, die Zahl von Operator-Arbeitsplätzen rechtzeitig anzupassen. Derartige Engpässen liessen sich entschärfen, wenn die Operatoren in Bereitschaft von abgesetzten, schneller erreichbaren Arbeitsplätzen aus arbeiten könnten, beispielsweise von einem Heimarbeitsplatz aus. Die benötigten Gerätschaften, im wesentlichen ein PC und eine Sprechgarnitur, fallen dabei nicht gross ins Gewicht. Probleme ergeben sich jedoch bezüglich des Anschlusses an die Platzsteuereinheit, müssen doch gleichzeitig die Sprechverbindung und der Arbeitsplatzrechner mit ihr in Verbindung stehen. Zwar sind Modem- oder ISDN-Verbindungen zwischen Rechnern für den Datenaustausch oder die Fernsteuerung über das Telephonnetz bekannt. Die Sprechverbindung hingegen wird von der OSX vermittelt und endet an der Platzsteuereinheit.

Aus der EP 0177 218 A2 ist eine Dienstvermittlungsstelle mit einer Mehrzahl Operator-Arbeitsplätze bekannt, bei der unter Kontrolle einer Steuerungseinrichtung ankommende Anrufe an die einzelnen Operator-Arbeitsplätze geschaltet werden. Die Dienstvermittlungsstelle besitzt mehrere Festleitungen zu einer zweiten Dienstvermittlungsstelle, so dass ankommende Anrufe erforderlichenfalls unter der Kontrolle der Steuerungseinrichtung direkt an die zweite Dienstvermittlungsstelle weitergeschaltet werden können. Diese Lösung erfordert aber umfangreiche Änderungen an bestehenden Dienstvermittlungsstellen.

Somit ergibt sich als Problem, ergänzende Einrichtungen bereitzustellen, mit deren Hilfe ein Operator-Arbeitsplatz von ferne ohne Komforteinbusse betrieben werden kann, ohne dabei Aenderungen an den bestehenden Einrichtungen vornehmen zu müssen.

Die Aufgabe wird gelöst durch einen fernbedienten Operator-Arbeitsplatz mit den Merkmalen des Patentanspruchs 1, einen abgesetzten Operator-Arbeitsplatz mit den Merkmalen des Patentanspruchs 4 und einem Verfahren zum Betrieb der Arbeitsplätze mit den Merkmalen des Patentanspruchs 8.

Die Fernbedienung des lokalen Operator-Arbeitsplatzes muss einerseits den Umgang mit dem lokalen Arbeitsplatzrechner einschliessen, andererseits die Sprechverbindung zum anrufenden Teilnehmer übernehmen und aufrecht erhalten. Die Erfindung sieht eine Rechnerfernsteuerung über das Telephonnetz und eine Sprechverbindung über das Telephonnetz vor. Die Rechnerfernsteuerung soll unter Beibehaltung der gebräuchlichen (graphischen) Benutzeroberfläche praktisch verzögerungsfrei erfolgen, was auch mit einem optimierten Fernsteuerungs-Anwendungsprogramm eine verhältnismässig hohe Datenübertragungsgeschwindigkeit bedingt. Deshalb wird der lokale Arbeitsplatzrechner als ISDN-Endgerät am Telephonnetz betrieben. Die Sprechverbindung vom Anrufer über die Dienstvermittlungsstelle wird von dieser an ein spezielles Modul, die Platzsteuereinheit, vermittelt und endet üblicherweise an einer an letzterer angesteckten Sprechgarnitur. Die Weiterführung dieser Sprechverbindung zu einem abgesetzten Arbeitsplatz macht einen grossen Teil des Problems aus. Ohne erhebliche Aenderungen im System des digitalen Vermittlungsplatzes ist es nicht möglich, die Sprechverbindung eines vom lokalen Arbeitsplatzrechner entgegengenommenen Anrufs durch die OSX auch noch an ein anderes Teilnehmerendgerät zu vermitteln. Denkbar wäre es, den für die Sprechgarnitur vorgesehenen Anschluss an der Platzsteuereinheit mit dem Mikrophon-/Hörer-Anschluss einer Teilnehmerstation direkt zu verbinden und mit deren Hilfe eine feststehende Verbindung über das Telephonnetz zum abgesetzten Arbeitsplatz zu etablieren. Diese Anordnung hat aber den Nachteil, dass für den Aufbau der Verbindung eine Bedienung dieser Teilnehmerstation nötig ist. Könnte dies einmalig bei Arbeitsbeginn am abgesetzten Arbeitsplatz noch hingenommen werden, so ist dies unpraktikabel, wenn versehentlich ein Verbindungsunterbruch eintritt. Die Erfindung sieht daher eine Leitung für die Sprechverbindung von der Platzsteuereinheit zum lokalen Arbeitsplatzrechner vor, gegebenenfalls unter Zwischenschaltung einer Gabelschaltung. Damit erhält der Rechner Kontrolle über die Sprechverbindung und kann diese selbsttätig auf- und abbauen. Mit Vorteil wird dafür nicht ein weiterer Telephonanschluss vorgesehen, sondern der Rechner als ISDN-Endgeräte-Anpassung (Terminal Adapter, TA) benützt. Dann kann er dank des ISDN-Anschlusses die Sprechverbindung über den einen und die Rechnerfernsteuerung über den anderen ISDN-Kanal abwickeln.

Bevorzugt erfolgen die Anschlüsse über eine ISDN-Einbaukarte für den Arbeitsplatzrechner, die sowohl einen S-Bus-Anschluss also auch einen a/b-Zweidrahtleitungs-Anschluss aufweist, also gleichzeitig als ISDN-Endgeräte-Anpassung (Terminal Adapter, TA) wirkt.

Der abgesetzte Operator-Arbeitsplatz ist mit einem gleichartigen Arbeitsplatzrechner bestückt wie der darüber fernbediente Operator-Arbeitsplatz, jedoch sind die zusätzlichen Ausrüstungen nicht erforderlich, wie Anwendungsprogramm für die Bedienung der Platzsteuerung, Speichermedien und Anschluss an weitere Rechner. Benötigt werden hingegen ein ISDN-Anschluss ans Telephonnetz und ein aktives Anwendungsprogramm, das die Steuerung eines entfernten Rechners über eine Telephonverbindung ermöglicht. Ferner muss eine Sprechverbindung zum Telephonnetz bestehen. Mit Vorteil wird die Sprechverbindung ebenfalls über den Rechner geführt, was eine automatische Verbindungsaufnahme ermöglicht. Eine bevorzugte Ausführungsform sieht dieselbe Einbaukarte für den abgesetzten Arbeitsplatzrechner vor, wie sie für den lokalen Arbeitsplatzrechner verwendet wird, so dass sich nebst der vorteilhaften Schaltung der Sprechverbindung über den Rechner auch eine Verwendung der beiden ISDN-Kanäle für Sprache und Rechnerdaten ergibt. Weiter lässt sich die gleiche Leitung mit der Gabelschaltung verwenden, wie sie für die Verbindung der Platzsteuereinheit, die für die Sprechverbindung einen Mikrophon-Eingang und einen Hörer-Ausgang aufweist, mit dem lokalen Arbeitsplatzrechner zum Einsatz kommt; an die Stelle der Verbindung zwischen Gabelschaltung und Platzsteuereinheit tritt hier jedoch eine Sprechgarnitur.

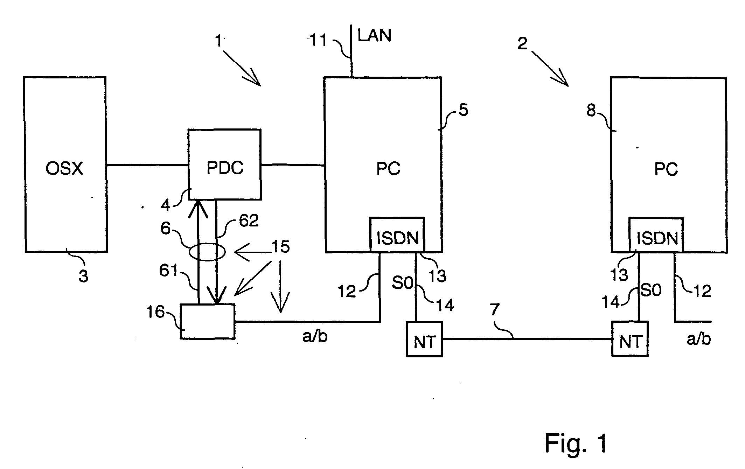

Die Erfindung wird nachstehend anhand der einzigen Figur 1 eingehender erklärt.

Die Figur 1 zeigt schematisch eine bevorzugte Anordnung eines fernbedienten Operator-Arbeitsplatzes und eines abgesetzten Operator-Arbeitsplatzes, die über das Telephonnetz miteinander in Verbindung stehen. Der fernbediente Operator-Arbeitsplatz 1, auch als digitaler Vermittlerplatz (DOP) bezeichnet, ist über eine Platzsteuereinheit (PDC) 4 mit einer Dienstvermittlungsstelle (OSX) 3 verbunden und besteht im wesentlichen aus einem lokalen Arbeitsplatzrechner (PC) 5 sowie einem Anschluss 6 an der PDC 4 für die von der OSX 3 vermittelten Sprechverbindung. Dieser fernbediente Operator-Arbeitsplatz 1 wird von einem abgesetzten Arbeitsplatz 2 ferngesteuert, der über eine Telephonleitung 7 mit ersterem verbunden ist und im wesentlichen aus einem abgesetzten Arbeitsplatzrechner 8 und einem Anschluss für eine Sprechverbindung besteht, die in der Figur 1 in Form der a/b-Zweidrahtleitung angegeben ist.

An einem digitalen Vermittlerplatz werden die von der OSX 3 kommenden Anrufe in einer Wechselwirkung zwischen der Platzsteuereinheit 4 und dem lokalen PC 5 an diesem angezeigt, auf eine Bedieneingabe hin entgegengenommen und die zugehörige Sprechverbindung in der PDC 4 entsprechend aufbereitet an den hierfür vorgesehenen Anschluss 6 geschaltet. Die Platzsteuereinheit 4 besorgt die Wandlung des digitalen Telephoniesignals in ein normiertes Analogsignal für den Anschluss einer herkömmlichen Teilnehmerstation an einer a/b-Zweidrahtleitung oder direkt einer Sprechgarnitur an einer Vierdrahtleitung. Ueblicherweise besteht der Anschluss 6 an der PDC 4 aus zwei Zweidrahtverbindungen, je einer für den Hörer und das Mikrophon einer Sprechgarnitur, das heisst, die Gabel ist in der PDC 4 enthalten, wobei die Platzsteuereinheit 4 als Modul der Dienstvermittlungsstelle 3 als eigenständige Einheit am Ort des lokalen Operator-Arbeitsplatzes 1 angeordnet ist. Diese Gestaltung ist allerdings nicht zwingend; die PDC 4 kann auch in die OSX 3 integriert sein und der Anschluss 6 der Sprechverbindung kann eine a/b-Zweidrahtleitung sein. Während des Gesprächs bedient der Operator den lokalen Arbeitsplatzrechner 5, der über einen Datennetzanschluss 11 in ein lokales Netz (local area network, LAN) eingebunden ist, und beschafft sich mit dessen Hilfe die gewünschte verfügbare Information von lokalen Speichermedien (nicht gezeichnet) oder dem Datennetz.

Für die Fernsteuerung dieses Arbeitsplatzes wird ein abgesetzter Arbeitsplatzrechner 8 benützt. Ueber die Telephonleitung 7 werden die Bildschirmanzeige des lokalen PC 5 auf den Bildschirm des abgesetzten PC 8 und die Tastaturbefehle des letzteren an den ersteren übertragen. Derartige, bekannte Fernsteuerungen bedingen aufeinander abgestimmte, operative Anwendungsprogramme in beiden Rechnern und Modems an den Anschlüssen der Telephonleitung 7. Der benötigten Uebertragungsgeschwindigkeit wegen wird ein ISDN-Anschluss benützt. Die Figur 1 zeigt denn auch schematisch an beiden Arbeitsplatzrechnern je eine ISDN-Einbaukarte 13, die über den S-Bus 14 mit der Netzabschlusseinheit (network terminator, NT) des diensteintegrierenden digitalen Fernmeldenetzes verbunden ist.

Für eine Fernbedieung muss die Sprechverbindung bis zum abgesetzten Arbeitsplatz geführt werden. Erfindungsgemäss geschieht dies, indem eine Leitung 15 für eine analoge Sprechverbindung den lokalen Arbeitsplatzrechner 5 mit der Platzsteuereinheit 4 verbindet. Eine derartige Leitung ermöglicht es, die Sprechverbindung, die bei lokaler Benützung des Arbeitsplatzes am Anschluss 6 der PDC 4 endet, über den PC 5 weiterzuschalten, insbesondere von diesem über das Telephonnetz zum abgesetzten Arbeitsplatz. In der bevorzugten Ausführungsform besteht diese Leitung 15 rechnerseitig aus einer a/b-Zweidrahtleitung 12, die über eine Gabelschaltung 16 an den Mikrophon-Eingang 61 und den Hörer-Ausgang 62 der Platzsteuereinheit 4 angeschlossen ist, wobei die a/b-Zweidrahtleitung 12 an den hierfür vorhandenen Anschluss an der ISDN-Einbaukarte 13 führt. Diese Ausführungsform hat den Vorteil, die üblicherweise vorhandene Einrichtung am lokalen Arbeitsplatz nicht verändern zu müssen, um zur Fernbedienung übergehen zu können. Die Leitung zwischen PDC 4 und PC 5 mit der darin liegenden Gabelschaltung lässt sich einfach an die ohnehin vorhandenen Steckvorrichtungen anschliessen. Die Verbindung der Sprechverbindung zum Telephonnetz erfolgt über die ISDN-Karte 13 und den S-Bus 14 auf dem zweiten Kanal des einzig benötigten ISDN-Anschlusses. Letzterer kann ständig bestehen bleiben - aktiviert wird er durch das Anwendungsprogramm des lokalen Arbeitsplatzrechners 5. Sobald das Anwendungsprogramm zur Fernsteuerung aktiviert ist, lässt sich der lokale Arbeitsplatzrechner fernsteuern und damit auch die Sprechverbindung weitervermitteln.

Der abgesetzte Operator-Arbeitsplatz 2 benötigt nebst dem abgesetzten Arbeitsplatzrechner 8 mit einem aktivierten Anwendungsprogramm für die Fernsteuerung eines Rechners über die Telephonleitung und dem dazugehörigen Anschluss eine Sprechverbindung. Es ist möglich, diese Verbindung über eine separate Amtslinie zu führen, oder über die Netzabschlusseinheit des ISDN-Anschlusses und eine Endgeräteanpassung (Terminal Adapter, TA); an Stelle des üblichen, analogen Teilnehmerapparats wird mit Vorteil eine Gabelschaltung und eine Sprechgarnitur verwendet. Es ist ebenfalls denkbar, die Verbindung über die Netzabschlusseinheit und ein ISDN-Endgerät zu führen. In all diesen Fällen ist allerdings die Mitwirkung des Operators beim Aufbau der Verbindung nötig. Bevorzugt wird daher auch hier im abgesetzten PC 8 eine gleiche ISDN-Einbaukarte 13 verwendet wie im lokalen Arbeitsplatzrechner 5. Sie weist einen integrierten Anschluss einer a/b-Zweidrahtleitung 12 auf, das heisst, die ISDN-Einbaukarte 13 umfasst die Endgeräteanpassung für den an der a/b-Zweidrahtleitung 12 anschliessbaren Teilnehmerapparat. Diese Ausführung ermöglicht es, auch auf der abgesetzten Seite die Aufnahme, die Ueberwachung und den Abbruch der Verbindung über den Rechner 8 zu steuern. An Stelle des Teilnehmerapparats kann dadurch eine einfache Gabelschaltung, identisch zur Gabelschaltung 16 am fernbedienten Operator-Arbeitsplatz 1, und eine daran angeschlossene Sprechgarnitur verwendet werden.

Sofern am lokalen Operator-Arbeitsplatz 1 die Verbindung der Platzsteuereinheit 4 über die Leitung 15 zum Rechner 5 hergestellt und in letzterem das Anwendungsprogramm aktiv ist, das eine Fernsteuerung über eine Telephonverbindung ermöglicht, lässt sich dieser Arbeitsplatz vollständig von ferne bedienen. Der Operator am abgesetzten Arbeitsplatz 2 stellt zu diesem Zweck zunächst die Telephonverbindung von seinem Arbeitsplatzrechner 8 zu jenem des lokalen Arbeitsplatzes 1 her und gewinnt so Kontrolle über den lokalen Arbeitsplatzrechner 5. Sodann bauen die beiden Rechner programmgestützt die Sprechverbindung zu einer zweiten Nummer des ISDN-Anschlusses des abgesetzten Arbeitsplatzes 2 auf und halten sie aufrecht. Der lokale Rechner 5 sorgt überdies für die Durchschaltung der Signale auf der Leitung 15 auf diese neu geschaffene Verbindung. Der abgesetzte Rechner 8 seinerseits schaltet diese auf die abgehende a/b-Zweidrahtleitung 12 an der eine Gabelschaltung und eine Sprechgarnitur angeschlossen sind (nicht gezeichnet).

## Patentansprüche

1. Fernbedienter Operator-Arbeitsplatz (1) mit einer an eine Dienstvermittlungsstelle (3) angeschlossenen Platzsteuereinheit (4) und einem damit verbundenen lokalen Arbeitsplatzrechner (5), der unter anderem in der Platzsteuereinheit (4) die Sprechverbindung zwischen der Dienstvermittlungsstelle (3) und dem hierfür vorgesehenen Anschluss an der Platzsteuereinheit (4) schaltet, **dadurch gekennzeichnet, dass** der lokale Arbeitsplatzrechner (5) über einen ISDN-Anschluss mit dem Telephonnetz verbunden ist, im Arbeitsplatzrechner (5) ein Anwendungsprogramm operativ ist, das die Fernsteuerung des Rechners (5) ermöglicht, eine Leitung (15) für eine analoge Sprechverbindung den lokalen Arbeitsplatzrechner (5) mit der Platzsteuereinheit (4) verbindet, und der Rechner (5) mit Mitteln versehen ist, die einen Auf- und Abbau einer Verbindung über das Telephonnetz zur Weiterleitung der Sprechverbindung ermöglichen.

2. Arbeitsplatz nach Anspruch 1 mit einer Platzsteuereinheit (4), die für die Sprechverbindung einen Mikrophon-Eingang (61) und einen Hörer-Ausgang (62) aufweist, **dadurch gekennzeichnet, dass** die Leitung (15) für die analoge Sprechverbindung rechnerseitig aus einer a/b-Zweidrahtleitung (12) besteht, die über eine Gabelschaltung (16) an den Mikrophon-Eingang (61) und den Hörer-Ausgang (62) der Platzsteuereinheit (4) angeschlossen ist.

3. Arbeitsplatz nach Anspruch 1, **dadurch gekennzeichnet, dass** der ISDN-Anschluss rechnerseitig durch eine Einbaukarte (13) für den Arbeitsplatzrechner (5) ausgeführt ist, die sowohl einen S-Bus-Anschluss als auch einen a/b-Zweidrahtleitungs-Anschluss aufweist.

4. Abgesetzter Operator-Arbeitsplatz (2) zur Fernbedienung eines Arbeitsplatzes nach Anspruch 1, **dadurch gekennzeichnet, dass** ein abgesetzter Arbeitsplatzrechner (8) über einen ISDN-Anschluss mit dem Telephonnetz verbunden ist, im Arbeitsplatzrechner (8) ein Anwendungsprogramm operativ ist, das die Steuerung eines entfernten Rechners ermöglicht, und dass eine Sprechverbindung zum Telephonnetz besteht.

5. Arbeitsplatz nach Anspruch 4, **dadurch gekennzeichnet, dass** der ISDN-Anschluss rechnerseitig durch eine Einbaukarte (13) für den Arbeitsplatzrechner (8) ausgeführt ist, die sowohl einen S-Bus-Anschluss als auch einen a/b-Zweidrahtleitungs-Anschluss aufweist.

6. Arbeitsplatz nach Anspruch 5, **dadurch gekennzeichnet, dass** die Sprechverbindung zum Telephonnetz über den a/b-Zweidrahtleitungs-Anschluss der Einbaukarte (13) geführt ist.

7. Arbeitsplatz nach Anspruch 6, **dadurch gekennzeichnet, dass** am a/b-Zweidrahtleitungs-Anschluss eine Gabelschaltung angeschlossen ist, die einen Mikrophon-Eingang und einen Hörer-Ausgang aufweist, an welche eine einfache Sprechgarnitur anschliessbar ist.

8. Verfahren zum Betrieb eines fernbedienten Operator-Arbeitsplatzes gemäss Anspruch 1 mit einem abgesetzten Operator-Arbeitsplatz gemäss Anspruch 4, wobei ein lokaler Arbeitsplatzrechner (5) von einem abgesetzten Arbeitsplatzrechner (8) über eine Telephonverbindung (7) ferngesteuert wird und die Anzeigen des lokalen Arbeitsplatzrechners (5) über dieselbe Telephonverbindung (7) am abgesetzten Arbeitsplatzrechner (8) dupliziert werden, **dadurch gekennzeichnet, dass** der lokale Arbeitsplatzrechner (5) eine Sprechverbindung zum abgesetzen Operator-Arbeitsplatz (2) über das Telephonnetz aufrecht erhält und diese auf die Leitung (15) legt, welche ihn mit der Platzsteuereinheit (4) verbindet, so dass der lokale Arbeitsplatzrechner (5) die Sprechverbindung zwischen der Dienstvermittlungsstelle (3) und dem abgesetzten Operator-Arbeitsplatz (2) schaltet.

9. Verfahren nach Anspruch 8 mit einem fernbedienten Operator-Arbeitsplatz nach Anspruch 3 und einem abgesetzten Operator-Arbeitsplatz nach Anspruch 5, **dadurch gekennzeichnet, dass** die Sprechverbindung und die Telephonverbindung für die Rechnerfernsteuerung über die zwei Kanäle eines einzigen ISDN-Anschlusses abgewickelt werden.

## Claims

1. Remotely operated operator workstation (1), comprising a position desk controller (4) terminated to an operator service exchange (3), and comprising a local workstation computer (5) connected to said position desk controller (4), which remotely operated operator workstation (1), inter alia, in the position desk controller (4) switches the voice connection between the operator service exchange (3) and the termination, provided for this purpose, on the position desk controller (4), **characterized in that** the local workstation computer (5) is connected to the telephone network via an ISDN termination, there is operative in the workstation computer (5) an application program which permits the remote control of the computer (5), a line (15) for an analog voice connection connects the local workstation computer (5) to the position desk controller (4), and the computer (5) is provided with means which permit the set-up and tear-down of a connection via the telephone network for the purpose of forwarding the voice connection.

2. Workstation according to claim 1, comprising a position desk controller (4) which has a microphone input (61) and a headphone output (62) for the voice connection, **characterized in that** the line (15) for the analog voice connection consists, on the computer side, of an a/b two-wire line (12) which is terminated, via a hybrid circuit (16), to the microphone input (61) and the headphone output (62) of the position desk controller (4).

3. Workstation according to claim 1, **characterized in that**, on the computer side, the ISDN termination is realized by a built-in card (13) for the workstation computer (5), which built-in card has both an S-bus termination and an a/b two-wire line termination.

4. Remote operator workstation (2) for the remote operation of a workstation according to claim 1, **characterized in that** a remote workstation computer (8) is connected to the telephone network via an ISDN termination, there is operative in the workstation computer (8) an application program which permits the control of a remote computer, and there is a voice connection to the telephone network.

5. Workstation according to claim 4, **characterized in that**, on the computer side, the ISDN termination is realized by a built-in card (13) for the workstation computer (8), which built-in card has both an S-bus termination and an a/b two-wire line termination.

6. Workstation according to claim 5, **characterized in that** the voice connection to the telephone network is routed via the a/b two-wire line termination of the built-in card (13).

7. Workstation according to claim 6, **characterized in that** there is terminated to the a/b two-wire line termination a hybrid circuit which has a microphone input and a headphone output, to which said input and output a simple headset can be terminated.

8. Method for operating a remotely operated operator workstation according to claim 1 by means of a remote operator workstation according to claim 4, wherein a local workstation computer 5 is remotely controlled by a remote workstation computer (8) via a telephone connection (7), and the displays of the local workstation computer (5) are duplicated on the remote workstation computer (8) via the same telephone connection (7), **characterized in that** the local workstation computer (5) maintains a voice connection to the remote operator workstation (2) via the telephone network and connects said voice connection to the line (15) that connects said local workstation computer (5) to the position desk controller (4), so that the local workstation computer (5) switches the voice connection between the operator service exchange (3) and the remote operator workstation (2).

9. Method according to claim 8 using a remotely operated operator workstation according to claim 3 and a remote operator workstation according to claim 5, **characterized in that** the voice connection and the telephone connection for the computer remote control are handled via the two channels of a single ISDN termination.

## Revendications

1. Poste d'opérateur (1) télécommandé comprenant une unité de commande de poste (4) raccordée à un centre de transmission de service (3) et un ordinateur personnel (5) local relié à cette unité, qui commute entre autres dans l'unité de commande de poste (4) la liaison phonie entre le service de transmission de service (3) et le branchement prévu à cet effet sur l'unité de commande de poste (4), **caractérisé en ce que** l'ordinateur personnel (5) local est relié au réseau téléphonique par un raccordement ISDN, un programme d'application, qui permet la télécommande de l'ordinateur (5), est opérationnel dans l'ordinateur personnel (5), une liaison (15) relie pour une liaison phonie analogique l'ordinateur personnel (5) local à l'unité de commande de poste (4), et l'ordinateur (5) est doté de moyens qui permettent un établissement et une interruption d'une liaison par le réseau téléphonique pour la transmission de la liaison phonie.

2. Poste de travail selon la revendication 1 comprenant une unité de commande de poste (4), qui présente pour la liaison phonie une entrée de microphone (61) et une sortie d'écouteur (62), **caractérisé en ce que** la ligne (15) pour la liaison phonie analogique comprend côté ordinateur une liaison à deux fils a/b (12), qui est raccordée par un termineur (16) à l'entrée du microphone (61) et la sortie de l'écouteur (62) de l'unité de commande de poste (4).

3. Poste de travail selon la revendication 1, **caractérisé en ce que** le branchement ISDN est réalisé côté ordinateur par une carte intégrée (13) pour l'ordinateur personnel (5), qui présente aussi bien un raccordement de bus S qu'un raccordement de ligne à deux fils a/b.

4. Poste d'opérateur (2) éloigné pour la télécommande d'un poste de travail selon la revendication 1, **caractérisé en ce qu'**un ordinateur personnel (8) éloigné est relié par un branchement ISDN au réseau de téléphone, un programme d'application, qui permet la commande d'un ordinateur éloigné, est opérationnel dans l'ordinateur personnel (8), et **en ce qu'**on a une liaison phonie avec le réseau de téléphone.

5. Poste de travail selon la revendication 4, **caractérisé en ce que** le branchement ISDN est réalisé côté ordinateur par une carte intégrée (13) pour l'ordinateur personnel (8), qui présente aussi bien un raccordement de bus S qu'un branchement de ligne à deux fils a/b.

6. Poste de travail selon la revendication 5, **caractérisé en ce que** la liaison phonie avec le réseau de téléphone est guidé par le branchement de ligne à deux fils a/b de la carte intégrée (13).

7. Poste de travail selon la revendication 6, **caractérisé en ce qu'**un termineur, qui présente une entrée de microphone et une sortie d'écouteur auquel un casque téléphonique simple peut être raccordé, est raccordé au branchement de ligne à deux fils a/b.

8. Procédé pour l'exploitation d'un poste d'opérateur télécommandé selon la revendication 1 avec un poste d'opérateur éloigné selon la revendication 4, un ordinateur personnel (5) local étant télécommandé par un ordinateur personnel (8) éloigné via une liaison de téléphone (7) et les affichages de l'ordinateur personnel (5) local étant dupliqués au moyen de la même liaison de téléphone (7) sur l'ordinateur personnel (8) éloigné, **caractérisé en ce que** l'ordinateur personnel (5) local maintient une liaison téléphonie avec le poste d'opérateur (2) éloigné via le réseau de téléphone et passe cette liaison sur la ligne (15) qui le relie à l'unité de commande de poste (4), de sorte que l'ordinateur personnel (5) local commute la liaison téléphonie entre le centre de transmission de service (3) et le poste d'opérateur (2) éloigné.

9. Procédé selon la revendication 8 avec un poste d'opérateur télécommandé selon la revendication 3 et un poste d'opérateur éloigné selon la revendication 5, **caractérisé en ce que** la liaison phonie et la liaison de téléphone pour la télécommande par ordinateur sont réalisées au moyen de deux voies d'un branchement ISDN unique.
